# EUROPÄISCHE PATENTANMELDUNG

(11) **EP 0 673 746 A1**
(43) Veröffentlichungstag der Anmeldung: **27.09.1995**
(21) Anmeldenummer: 95102758.0
(22) Anmeldetag: 27.02.1995
(51) Int. Cl.: B29C 45/56, B29C 67/24

(54) **Verfahren und Vorrichtung zur Herstellung von Formteilen aus Mehrkomponenetenkunststoffen**

(30) Priorität: 11.03.1994 DE 4408211; 30.11.1994 DE 4442536
(71) Anmelder: MASCHINENFABRIK HENNECKE GmbH, D-51379 Leverkusen (DE); BAYER AG, 51368 Leverkusen (DE)
(72) Erfinder: Sulzbach, Hans-Michael, Dipl. Ing., D-53639 Königswinter (DE); Schneider, Walter, Dipl. Ing., D-51491 Overath (DE)
(74) Vertreter: Drope, Rüdiger, Dr.

(57) **Zusammenfassung**

Es werden ein Verfahren und eine Vorrichtung zur Herstellung von Polyurethanformkörpern beschrieben, wobei der Nachdruck vor Beendigung der Formfüllung einsetzt. Dabei wird während der erforderlichen Überfüllung der Form mit Reaktionsgemisch mindestens eine Formhälfte gegen vorgespannte Federelemente angehoben.

## Beschreibung

Die vorliegende Erfindung betrifft ein Verfahren und eine Vorrichtung zur Herstellung von Formteilen aus massivem oder mikrocellularem Kunststoff, insbesondere Polyurethan, durch Reaktion eines fließfähigen Reaktionsgemisches aus mindestens zwei Komponenten. Dabei besteht die Vorrichtung aus einer Schließeinheit mit Formwerkzeug und Mischvorrichtung für die Reaktionskomponenten, wobei jeweils eine Formwerkzeughälfte auf einer Grundplatte der Schließeinheit angeordnet ist und das Formnest bei geschlossener Form und fehlendem Forminnendruck durch Distanzblöcke zwischen den Grundplatten definiert ist. Solche Formwerkzeuge werden üblicherweise als Tauchkantenwerkzeuge ausgeführt, bei denen die Abdichtung der Form durch parallel zur Schließrichtung der Formhälften verlaufende Flächen erfolgt. Bei geschlossener Form überlappen die dichtenden Flächen, d.h. die eine Formhälfte taucht in die andere Formhälfte ein.

Eine solche Vorrichtung ist aus EP-A-0 206 100 grundsätzlich bekannt. Es ist ferner bekannt, bei der Herstellung von Formteilen aus Mehrkomponentenkunststoffen nach dem Füllen der Form den Forminnendruck derart zu erhöhen, daß die Form unter Vermeidung von Lunkern, Bläschen und sogenannten Voids durch die Formmasse gut abgebildet wird, d.h. evtl. eingeschlossene Luftbläschen aufgrund des Forminnendrucks in der Formmasse gelöst werden. Aufgrund der "chemischen Schwindung", d.h. der Volumenverringerung der Formmasse während der Reaktion, ist es hierzu erforderlich, zur Erhaltung des Forminnendruckes das Volumen des Formnestes entsprechend der Schwindung zu reduzieren. Dabei muß die Überlappung der dichtenden Flächen der Formhälften in Schließrichtung, d.h. die Eintauchtiefe der einen Formhälfte in die andere Formhälfte, so bemessen sein, daß bei der erforderlichen anfänglichen Überfüllung der Form die Überlappung noch nicht aufgehoben wird.

Gemäß EP-A-0 206 100 wurde vorgeschlagen, der Schließeinheit Hubelemente zuzuordnen, die der Schließkraft während des Füllens der Form entgegenwirken und dabei das Volumen des Formnestes um 2 bis 5 % vergrößern, so daß eine Überfüllung der Form mit Reaktivmasse möglich ist. Nach Beendigung des Füllvorganges wird die Wirkung der Hubelemente aufgehoben, so daß die Schließkraft unter Erzeugung des Forminnendruckes auf das Formteil wirkt. Nachteilig bei dem bekannten Verfahren ist, daß ein erheblicher apparativer Aufwand zur Steuerung der Hubelemente erforderlich ist. Ferner erfolgt der Aufbau des Forminnendruckes mit einer gewissen Verzögerung nach Beendigung des Einfüllvorgangs, so daß bei den heute angewandten sehr schnell reagierenden RIM und RRIM-Verfahren die Reaktion vor der Ausbildung des Forminnendrucks ("Nachdruck") bereits fortschreitet, mit der Folge, daß relativ hohe Forminnendrücke erzeugt werden müssen, um die Form sicher abzubilden.

Gemäß EP-A-0 024 610 wurde auch bereits vorgeschlagen, das Formwerkzeug teilweise als elastische Membran auszubilden, die bei Überfüllung der Form das Überfüllungsvolumen aufgrund ihrer Durchbiegung aufnimmt und den Forminnendruck bereitstellt. Nachteilig dabei ist, daß einerseits die Temperaturkonstanz im Bereich der Membran des Formwerkzeuges nur schwer zu kontrollieren ist und andererseits insbesondere bei der Herstellung von dünnwandigen Formteilen die Formgenauigkeit nur schwer zu gewährleisten ist. Darüber hinaus kommt es bei zunehmender Verfestigung der Reaktivmasse zu einer sehr ungleichmäßigen Verteilung des Forminnendrucks über das Formteil.

Erfindungsgemäß wird nun vorgeschlagen, mindestens eine Formwerkzeughälfte eines Tauchkantenwerkzeuges gegen vorgespannte Federelemente gegen die zugehörige Grundplatte beweglich auszuführen, so daß bei geschlossener Form, d.h. bei beidseitig an den Distanzblöcken anliegenden Grundplatten, mindestens eine Formhälfte gegen die vorgespannten Federelemente gegenüber der anderen Formhälfte angehoben werden kann.

Die Vorspannung der Federelemente entspricht vorzugsweise einem Forminnendruck von bis 50 bar, vorzugsweise 10 bis 50 bar, besonders bevorzugt mindestens 20 bar.

Die Federelemente können beliebig ausgebildet sein, z.B. können Spiralfedern, Tellerfedern, Blattfedern, gummielastische Blöcke oder pneumatische Federelemente mit vorgespanntem Gasdruck eingesetzt werden.

Vorzugsweise ist die mindestens eine Formhälfte gegen die Federelemente um einen Weg bewegbar, der einer Volumenvergrößerung des Formnestes mindestens um den Betrag der chemischen Schrumpfung des Reaktionsgemisches entspricht, d.h. der minimale Hub der Formhälfte soll einer Volumenvergrößerung von mindestens 1,5 %, vorzugsweise 2 bis 5 %, bevorzugt nicht mehr als 4 %, entsprechen. Zur Herstellung von Formteilen von z.B. mittleren Dicken von 1 bis 20 mm ist es demnach ausreichend, die Vorrichtung so auszubilden, daß ein maximaler Hub von 1 mm möglich ist.

Die Federcharakteristik des Federelementes wird so gewählt, daß bei der zur Kompensation der chemischen Schrumpfung erforderlichen Überfüllung der Form sich der gewünschte Forminnendruck einstellt. Dieser kann nach Füllung der Form etwa 1 bis 80 bar oder höher, vorzugsweise mindestenss 25 bar, betragen. Erfindungsgemäß bevorzugt sind jedoch Federelemente mit einer Federcharakteristik, bei der aufgrund des erforderlichen Hubes der mindestens einen Formhälfte sich die Federspannung gegenüber der Vorspannung lediglich um einen Betrag von 20 bis 100 % erhöht.

In einer weiter bevorzugten Ausführungsform der vorliegenden Erfindung ist der Vorspanndruck der Federelemente durch variable Vorspannelemente wählbar.

Gegenstand der vorliegenden Erfindung ist auch ein Verfahren zur Herstellung von Formteilen aus einem massiven oder mikrocellularen Kunststoff, insbesondere Polyurethan, durch Reaktion eines fließfähigen Reaktionsgemisches aus mindestens zwei Komponenten, bei dem das Reaktionsgemisch aus einer Mischvorrichtung in die Form injiziert wird, wobei die Form zunächst mindestens um den Betrag der chemischen Schrumpfung der Reaktionsmasse überfüllt wird und in der Form ein Überdruck erzeugt wird, das dadurch gekennzeichnet ist, daß der Überdruck vor Beendigung des Einfüllvorgangs erzeugt wird und bis zum Entformen aufrechterhalten wird.

Vorzugsweise wird der maximale Forminnendruck von 1 bis 80 bar am Ende des Einfüllvorgangs der Reaktionsmischung erreicht. Der Forminnendruck darf bis zur Entformung nicht unter den Vorspanndruck der Federelemente fallen; vorzugsweise soll er auf nicht weniger als die Hälfte des maximalen Forminnendruckes abfallen.

Das erfindungsgemäße Verfahren wird vorzugsweise mittels der eingangs beschriebenen erfindungsgemäßen Vorrichtung durchgeführt, ohne daß komplizierte Steuerungseinrichtungen erforderlich sind. Die Füllung der Form aus der Mischvorrichtung erfolgt zunächst in das leere Formnest, bis ein Volumen, das dem Volumen des späteren Formteils entspricht, eingefüllt ist, im wesentlichen lediglich gegen den Strömungsdruck in der Form. Nach Erreichen dieses Füllvolumens setzt die Überfüllung der Form unter gleichzeitiger Erhöhung des Forminnendrucks bis zum Maximaldruck gegen die vorgespannten Federelemente ein.

Nach einer bevorzugten Ausführungsform der vorliegenden Erfindung werden mehrere Formwerkzeuge einer einzigen Schließeinheit zugeordnet. Jedem durch je ein Formwerkzeug gebildeten Formnest ist dabei eine Füllvorrichtung (Mischkopf) für die Reaktivmasse zugeordnet.

In einer weiter bevorzugten Ausführungsform werden die mehreren Mischköpfe einer Formschließeinheit aus gemeinsamen Vorratsbehältern für die Reaktivkomponenten über gemeinsame Pumpen mit den Reaktivkomponenten beschickt, wobei in den Zuleitungen Ventile vorgesehen sind, die so gesteuert werden, daß die mehreren Mischköpfe nacheinander beschickt werden.

Die Erfindung wird nachfolgend anhand der beigefügten Figuren näher erläutert:
- Fig. 1: zeigt eine erfindungsgemäße Vorrichtung ohne die Schließeinheit.
- Fig. 1a: zeigt das Detail A aus Fig. 1 in vergrößerter Darstellung.
- Fig. 2: zeigt eine Vorrichtung gemäß Fig. 1, wobei die obere Formhälfte um den maximal möglichen Weg angehoben ist.
- Fig. 3: zeigt eine erfindungsgemäße Vorrichtung entsprechend Fig. 1, wobei jedoch die Vorspannung der Federelemente einstellbar ist.
- Fig. 4: zeigt eine Vorrichtung gemäß Fig. 2, wobei mehrere Formwerkzeuge einer Schließeinheit zugeordnet sind.

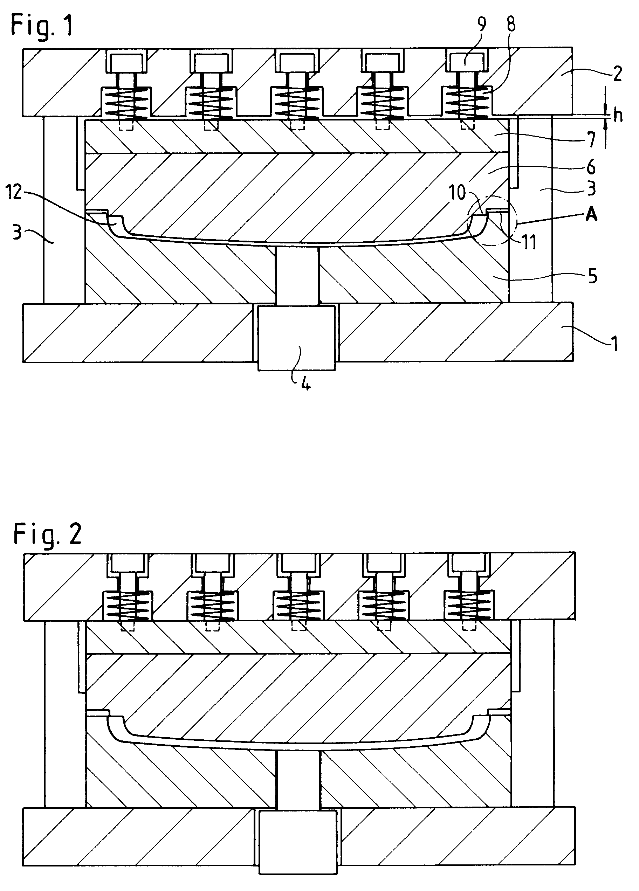

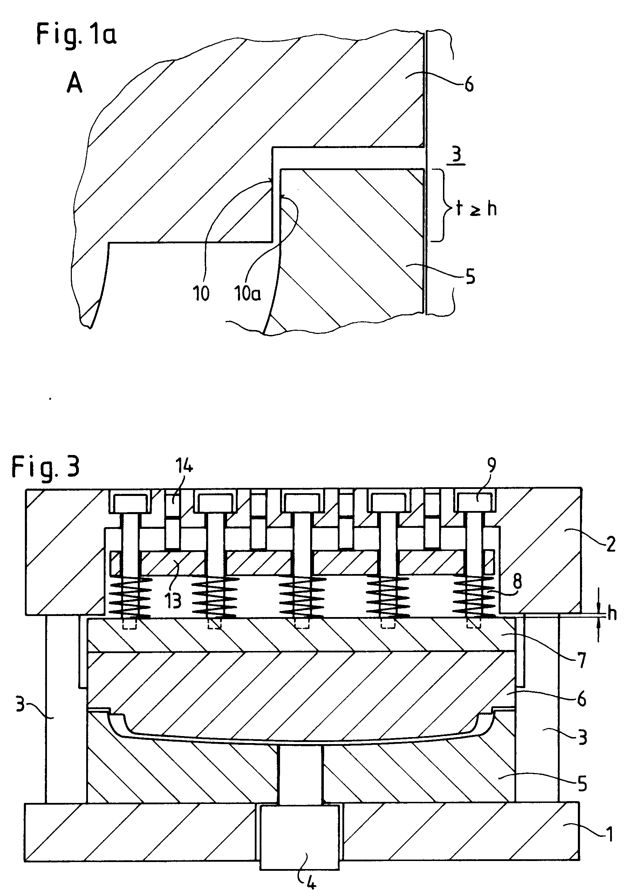

Fig. 1 zeigt die untere Grundplatte 1 und die obere Grundplatte 2, die aufgrund der Schließkraft der nicht gezeichneten Schließeinheit auf den Distanzblöcken 3 aufliegen. Die auf der unteren Grundplatte 1 befestigte untere Formhälfte 5 enthält die Mischvorrichtung 4, mittels derer das Reaktionsgemisch in das Formnest 12 eingetragen werden kann. Zwischen oberer Grundplatte 2 und oberer Formhälfte 6 ist eine Aufspannplatte 7 vorgesehen, an der die Formhälfte 6 befestigt ist. Die Vorsehung einer Aufspannplatte 7 ermöglicht es, die Formwerkzeuge 6 und 5 z.B. zur Herstellung anderer Formteile auszuwechseln. Die Aufspannplatte 7 ist mittels Vorspannschrauben 9 und als Schraubenfedern ausgebildeten Federelementen 8 gegen die obere Grundplatte montiert, so daß bei fehlendem Forminnendruck im Formnest 12 ein Spalt h zwischen Grundplatte 2 und Aufspannplatte 7 gebildet wird. Die Breite des Spaltes h stellt den maximalen Hub dar, um den die obere Formplatte 6 durch Erzeugung eines Forminnendruckes gegen die untere Formhälfte 5 und gegen die vorgespannten Federelemente 8 angehoben werden kann. Die Formtrennebene 11 zwischen unterer Formhälfte 5 und oberer Formhälfte 6 ist als Tauchkante 10 ausgebildet.

Fig. 1a zeigt das Detail A aus Fig. 1, nämlich die Umgebung der Tauchkante 10 bei fehlendem Forminnendruck. Dabei soll die Überlappungslänge t der Tauchkantenfläche 10 und Gegenfläche 10a in Schließrichtung des Tauchkantenwerkzeuges mindestens der Breite des Spaltes h (Fig. 1) entsprechen.

Gleiche Bezugszeichen in Fig. 3 bezeichnen gleiche Elemente wie in Fig. 1. Zwischen Grundplatte 2 und Aufspannplatte 7 ist eine Vorspannplatte 13 vorgesehen, auf die mit Schraubgewinde in die Grundplatte 2 eingelassene Vorspann-Justierschrauben 14 wirken, um den Vorspanndruck der Federelemente einzustellen.

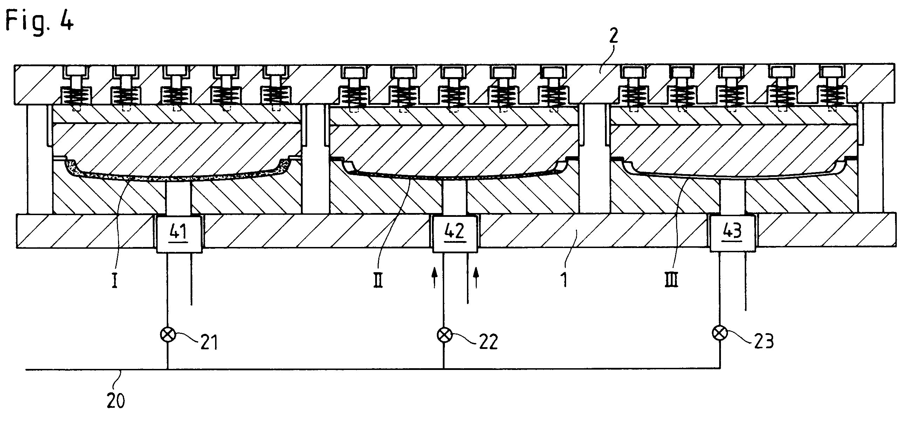

Gemäß Fig. 4 sind zwischen oberer und unterer Grundplatte 1, 2 mehrere Formwerkzeuge, die Formnester I, II und III bilden, vorgesehen.

Zu jedem Formnest gehört ein Mischkopf 41, 42, 43. Die Zuführung der Reaktivkomponenten erfolgt über gemeinsame Zufuhrleitungen 20 (gezeichnet ist die Zuführleitung nur für eine Komponente), die - über Ventile 21, 22, 23 gesteuert - nur jeweils in einen Mischkopf fördern.

Entsprechend dem dargestellten Betriebszustand ist das Formnest I mit der Reaktivmischung gefüllt. Ventil 21 ist geschlossen. Die obere Formhälfte ist gegen die Federelemente angehoben. Formnest II wird gefüllt. Ventil 22 ist geöffnet. Ventil 23 ist geschlossen.

## Patentansprüche

1. Vorrichtung zur Herstellung von Formteilen aus massivem oder mikrocellularem Kunststoff, insbesondere Polyurethan, durch Reaktion eines fließfähigen Reaktionsgemisches aus mindestens zwei Komponenten, bestehend aus einer Schließeinheit mit Formwerkzeug, das als Tauchkantenwerkzeug ausgebildet ist, und Mischvorrichtung für die Reaktionskomponenten, wobei jeweils eine Formwerkzeughälfte auf einer Grundplatte der Schließeinheit angeordnet ist und das Formnest bei geschlossener Form und bei fehlendem Forminnendruck durch Distanzblöcke zwischen den Grundplatten definiert ist, dadurch gekennzeichnet, daß mindestens eine Formwerkzeughälfte bei geschlossener Schließeinheit gegen vorgespannte Federelemente gegen die zugehörige Grundplatte beweglich ist.

2. Vorrichtung nach Anspruch 1, dadurch gekennzeichnet, daß die Vorspannung der Federelemente einem Forminnendruck von bis 50 bar entspricht.

3. Vorrichtung nach Anspruch 1 oder 2, dadurch gekennzeichnet, daß die mindestens eine Formhälfte gegen die Federelemente derart beweglich ist, daß eine Volumenvergrößerung des Formnestes mindestens um den Betrag der chemischen Schrumpfung des Reaktionsgemisches erfolgen kann.

4. Vorrichtung nach einem der Ansprüche 1 bis 3, dadurch gekennzeichnet, daß das Formwerkzeug als Tauchkantenwerkzeug ausgebildet ist.

5. Vorrichtung nach einem der Ansprüche 1 bis 4, dadurch gekennzeichnet, daß der Vorspanndruck der Federelemente einstellbar ist.

6. Vorrichtung nach einem der Ansprüche 1 bis 5, dadurch gekennzeichnet, daß einer Schließeinheit mit zugeordneten Grundplatten mehrere Formwerkzeuge zugeordnet sind.

7. Verfahren zur Herstellung von Formteilen aus massivem oder mikrocellularem Kunststoff, insbesondere Polyurethan, durch Reaktion eines fließfähigen Reaktionsgemisches aus mindestens zwei Komponenten, bei dem die Reaktionsmasse aus einer Mischvorrichtung in die Form injiziert wird, wobei die Form zunächst um mindestens den Betrag der chemischen Schrumpfung der Reaktionsmasse überfüllt wird und in der Form ein Überdruck erzeugt wird, dadurch gekennzeichnet, daß der Druck vor Beendigung des Einfüllvorganges erzeugt wird und bis zum Entformen aufrechterhalten wird.

8. Verfahren nach Anspruch 7, dadurch gekennzeichnet, daß eine Vorrichtung gemäß Anspruch 6 eingesetzt wird, wobei die Reaktionsmasse in mehrere der gemeinsamen Schließeinheit zugeordnete Formwerkzeuge nacheinander injiziert wird.
